# EUROPÄISCHE PATENTSCHRIFT

(11) **EP 1 784 676 B1**
(45) Veröffentlichungstag und Bekanntmachung des Hinweises auf die Patenterteilung: **16.07.2008**
(21) Anmeldenummer: 05782863.4
(22) Anmeldetag: 23.08.2005
(51) Int. Cl.: G02B 25/02

(54) **LEUCHTLUPE MIT EINER SENSOREINRICHTUNG ZUR EINSCHALTUNG DES LEUCHTELEMENTS**
ILLUMINATED MAGNIFYING GLASS HAVING A SENSOR DEVICE FOR SWITCHING ON THE LIGHTING ELEMENT
LOUPE ECLAIREE COMPRENANT UN SYSTEME DE DETECTION POUR METTRE SOUS TENSION L'ELEMENT D'ECLAIRAGE

(30) Priorität: 02.09.2004 DE 202004013815 U
(43) Veröffentlichungstag der Anmeldung: 16.05.2007
(73) Patentinhaber: A. Schweizer GmbH Optische Fabrik, D-91301 Forchheim (DE)
(72) Erfinder: SCHÜTTINGER, Alfred, 91336 Heroldsbach (DE)
(74) Vertreter: Hafner, Dieter
(86) Internationale Anmeldenummer: PCT/DE2005/001482
(87) Internationale Veröffentlichungsnummer: WO 2006/024269

(56) Entgegenhaltungen:
- DE-A1- 10 238 389
- DE-C1- 10 208 447
- DE-U1- 9 412 153
- DE-U1- 20 203 586

## Beschreibung

Die Erfindung/Neuerung betrifft eine vergrössemde optische Einrichtung in Form einer Leuchtlupe, die mindestens ein Griffelement und eine Leuchteinrichtung zur Beleuchtung des zu betrachtenden Gegenstandes aufweist und mit einer Sensoreinrichtung versehen ist.

Eine derartige Leuchtlupe geht aus DE 102 38 389 A1 hervor. Bei der Leuchtlupe nach diesem Stand der Technik handelt es sich um eine Visolettelupe, die direkt auf ein Schriftstück aufsetzbar ist. Diese bekannte Leuchtlupe weist ein Griffelement in Form einer topfartigen Umrandung des Lupenkörpers auf, mit dem der Lupenkörper über das zu betrachtende Schriftstück geschoben werden kann. Darüber hinaus geht aus der bekannten Offenlegungsschrift bereits ein Sensor hervor, der zur Einschaltung einer Beleuchtungseinrichtung dient Der Sensor reagiert bei dem Stand der Technik auf die Hand des Benutzers. Er ist dazu im Seitenbereich der Handhabe angeordnet.

DE 102 38 389 A1 offenbart eine Leuchtlupe mit einer Beleuchtungseinrichtung und einer Sensoreinrichtung, beispielsweise einem optischen Bewegungssensor zum Einschalten des Leuchtelementes. Die Positionierung des Sensorelementes ist hierbei nicht näher erwähnt.

DE 94 12 153 U1 lehrt eine beleuchtbare Standlupe, bei der ein Lupenträger schwenkbar an einem Ständer angelenkt ist. Die Beleuchtungsvorrichtung enthält ein im wesentlichen um die Lämpchenachse drehbares Drehteil, an das unterschiedliche Lupen derart lösbar ansteckbar sind, daß der Lupenabstand zur Objektebene durch an den Lupenfassungen angeformte Steckansätze der jeweiligen Brennweite angepaßt ist.

DE 202 03 586 U1 beschreibt eine Hand- oder Standlupe, mit einem in einem Abschnitt eines Gehäuses befestigten, vergrößernden optischen Elementes, sowie einem am Gehäuse angeordneten oder daran ansetzbaren elektronischen Bilderfassungssystem in Form einer Kamera. Diese Kamera ist als Farbkamera ausgebildet, wobei Kamera und Beleuchtungslicht über eine gemeinsame Steuerung einstellbar sind. Die Erfindung wird in den beigefügten Ansprüchen definiert.

Der Erfindung/Neuerung liegt die Aufgabe zugrunde, eine vergrössernde optische Einrichtung mit den Merkmalen des Oberbegriffes des Anspruches 1 derart auszubilden, dass sie hinsichtlich ihrer Einschaltvorrichtung verbessert ist. Diese Aufgabe wird dadurch gelöst, dass die zur Einschaltung des Leuchtelementes vorgesehene Sensoreinrichtung gegen eine die Leuchtlupe abstützende Unterlage gerichtet ist. Dazu kann ein Sensorelement der Sensoreinrichtung gegen die Unterlage gerichtet sein, wobei die Sensoreinrichtung z. B. als Druckschalter und das Sensorelement als die Unterlage mechanisch beaufschlagendes Element ausgebildet sind. Erfindungsgemäß ist die Sensoreinrichtung als optischer Sensor ausgebildet, der mit der Unterlage zusammenwirkt, so dass der Sensor z. B. auf Helligkeits- oder Kontraständerungen im Bereich der Unterlage reagierfähig ist. Ein derartiger optischer Sensor kann in einer zur Unterlage hin offenen Ausnehmung oder hinter einem zur Unterlage hin gerichteten Fenster oder einer Filterscheibe angeordnet sein und eine lichtaussendenden und einen lichtempfindlichen Bereich aufweisen. In besonders vorteilhafter Weise ist das Sensorelement am oder im unteren Ende eines Aufstellfußes angeordnet, der einen abstützenden Bereich der Leuchtlupe bildet, wobei der Aufstellfuß an dem einen Lupenkörper abgewandten Seite des Griffelementes angeordnet ist.

Erfindungsgemäß ist der Sensor ein die Farbe der mit der Leuchtlupe zu betrachtenden Unterlage analysierender Sensor, wobei die Leuchteinrichtung zur Abstrahlung unterschiedlicher Farben ausgelegt ist und hinsichtlich ihrer Farbabstrahlung durch den Sensor gesteuert werden kann. Eine derartige Leuchtlupe wählt dabei abhängig von der Farbzusammensetzung, insbesondere einer mittleren Farbzusammensetzung und Helligkeit die Farbe der Beleuchtung so, daß für einen sehbehinderten Menschen eine optimale, d. h. kontrastfördernde Beleuchtung im entsprechenden Spektralbereich gewährleistet ist. Zusätzlich ist es denkbar, auch die Helligkeit in Abhängigkeit von der Helligkeit der Unterlage automatisch zu steuern.

Ein derartiger Sensor kann als Farbkamera ausgelegt sein. Derartige Farbkameras sind heute als Minibauteile kommerziell erhältlich, so daß auf die genaue Ausbildung des Sensors nicht näher eingegangen werden muß. Eine derartige Farbkamera liefert ein Ausgangssignal, das einer Farbanalyseeinheit zugeführt werden kann, deren Ausgangssignal eine Farbsteuerschaltung der Leuchteinrichtung ansteuert. In Kombination mit einer derartigen farbanalysierenden Sensoreinrichtung bietet sich eine Leuchteinrichtung an, die als hinsichtlich ihrer Farbe veränderbare LED oder LED-Gruppe ausgebildet ist.

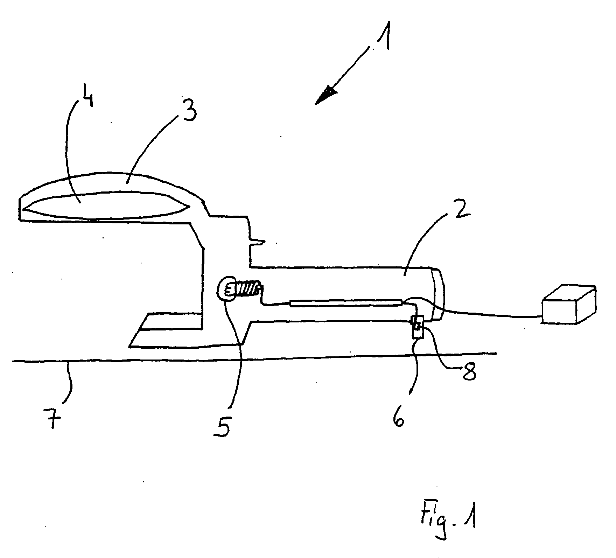

Die Erfindung ist anhand von Ausführungsbeispielen in den Zeichnungsfiguren näher erläutert. Diese zeigen
- Fig. 1: einen Schnitt durch eine Leuchtlupe mit einem Sensorelement;
- Fig. 2: die Anordnung des Sensorelementes im Aufstellfuß;
- Fig. 3: eine weitere schematische Darstellung gemäß Fig. 1, bei der ein weiterer oder alternativer Sensor vorgesehen ist, der die Farbe(n) der mit der Leuchtlupe zu betrachtenden Unterlage analysieren kann.

Zunächst wird auf Zeichnungsfigur 1 Bezug genommen. Die vergrößernde optische Einrichtung hat die Form einer Leuchtlupe 1, die ein Griffelement 2, ein im einen Rahmen 3 angeordneten Lupenkörper 4 sowie ein Leuchtelement 5 aufweist. Darüber hinaus ist mindestens eine Sensoreinrichtung 6 vorgesehen, die zur Einschaltung des Leuchtelementes 5 dient. Die Sensoreinrichtung 6 ist in einem die Leuchtlupe 1 gegen eine Unterlage 7, z. B. ein zu betrachtendes Dokument oder eine tischartige Unterlage abstützenden Bereich 8 vorgesehen. Dabei ist ein Sensorelement 9 der Sensoreinrichtung 6 gegen die Unterlage 7 gerichtet.

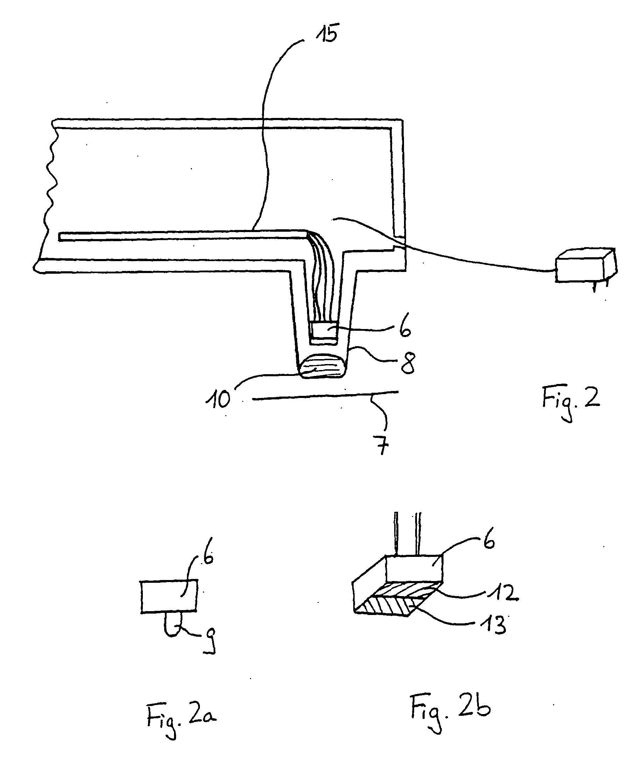

Bezugnehmend auf Fig. 2 kann die Sensoreinrichtung 6 als Druckschalter ausgebildet sein, wobei auf Fig. 2A Bezug genommen wird. Dann steht aus dem die Unterlage beaufschlagenden Bereich ein Sensorelement 9 der Sensoreinrichtung 6 aus einem Ausschnitt 10 des Bereiches 8 heraus. Ist die Sensoreinrichtung hingegen als optischer Sensor ausgebildet, so kann die Ausnehmung 10 mit einem Fenster verschlossen sein. Eine optische Sensoreinrichtung, die für die Anbringung in einem die Leuchtlupe gegen die Unterlage abstützenden Bereich 8 geeignet ist, ist in Fig. 2B dargestellt und weist einen lichtaussendenden Bereich 12 und einen lichtempfindlichen Bereich 13 auf. Wird ein derartiger Sensor über eine gemusterte Unterlage bewegt, so ändern sich die Reflektionsverhältnisse, ein von dem lichtempfindlichen Bereich ausgehendes Signal kann in einer Sensorschaltung auf einer Leiterplatte 15 der Sensoreinrichtung 6 verarbeitet werden und zur Ein- und Ausschaltung der Beleuchtung herangezogen werden.

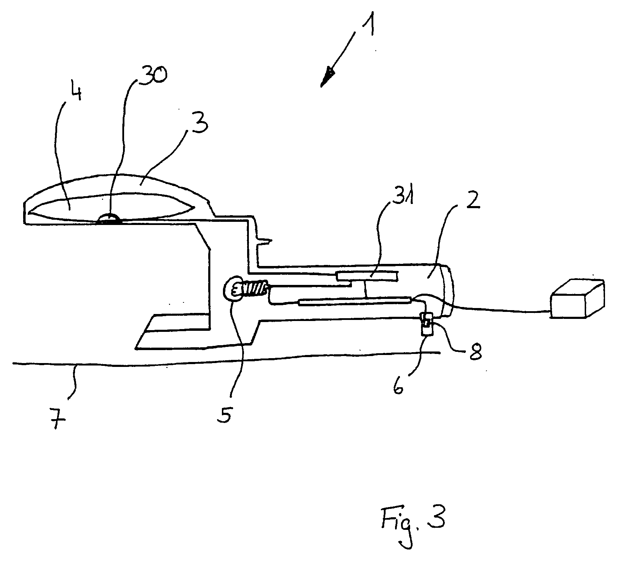

Unter Bezugnahme auf Fig. 3 weist die vergrößernde optische Einrichtung einen Sensor 30 auf, der geeignet ist, die Farbe oder Farbzusammensetzung der mit der Leuchtlupe 1 zu betrachtenden Unterlage 7 zu analysieren, wobei dann die Leuchteinrichtung 50 zur Abstrahlung unterschiedlicher Farben ausgelegt ist und in hinsichtlich ihrer Farbabstrahlung durch den Sensor 30 steuerbar ist. Dazu ist der Sensor 30 als kleine Farbkamera ausgebildet, deren Ausgangssignal hinsichtlich der erfaßten Farben einer Farbanalyseeinheit 31 zugeführt wird, deren Ausgangssignal eine Farbsteuerschaltung der Leuchteinrichtung ansteuert.

Es sei angemerkt, daß über die Sensoreinrichtung 6 bei einer kombinierten Anordnung von einem Sensor 6 und einem Farbanalysesensor 30 die gesamte Elektronik des Farbanalysesensors 30 eingeschaltet werden kann. Die Anordnung eines Farbanalysesensors mit hinsichtlich ihrer Farbe steuerbarer Lichtquelle eignet sich besonders gut dann, wenn die vergrößernde optische Einrichtung in Verbindung mit einer Farbkamera verwendet wird, durch die ein schwachsichtiger Benutzer das zu lesende Gut über einen Fernsehbildschirm beobachten kann. Dann ist für besonders gute Kontrastverhältnisse gesorgt.

Es sei angemerkt, daß die Farbsteuereinrichtung die Lichtquelle hinsichtlich ihrer Farbabstrahlung nicht notwendigerweise auf rotes, blaues oder grünes Licht oder dergleichen umschalten muß, sondern daß durch Kombination von Lichtquellen unterschiedlicher Farbe oder Leuchtdioden, deren Farbe verschiebbar ist, lediglich geringe Farbverschiebungen zum roten oder blauen Bereich ausreichen können, um die Kontrastverhältnisse zu verbessern. Außerdem kann natürlich auch die Helligkeit der Farbabstrahlung an die Unterlage angepaßt werden.

## Patentansprüche

1. Vergrößernde optische Einrichtung in Form einer Leuchtlupe (1), die mindestens ein Griffelement (2) und eine Leuchteinrichtung (5) zur Beleuchtung des zu betrachtenden Gegenstandes aufweist und mit einer Sensoreinrichtung (6) versehen ist, die zur Einschaltung des Leuchtelementes (5) vorgesehen und gegen eine die Leuchtlupe (1) in Gebrauchsstellung abstützende Unterlage (7) gerichtet ist,
**dadurch gekennzeichnet, dass**
das Sensorelement (6) im unteren Ende eines Aufstellfußes angeordnet ist, der einen abstützenden Bereich der Leuchtlupe (1) bildet und der Aufstellfuß an einem von einem Lupenkörper horizontal abstehenden Ende des Griffelementes (2) angeordnet ist, wobei der Sensor ein die Farbe(n) der mit der Leuchtlupe (1) zu betrachtenden Unterlage (7) analysierender Sensor (30) ist, die Leuchteinrichtung (50) zur Abstrahlung unterschiedlicher Farben ausgelegt ist und hinsichtlich ihrer Farbabstrahlung durch den Sensor (30) steuerbar ist.

2. Optische Einrichtung nach Anspruch 1,
**dadurch gekennzeichnet, dass**
die Sensoreinrichtung (6) in einem nach unten gerichteten, die Leuchtlupe (1) gegen die Unterlage (7) abstützenden Bereich (8) angeordnet ist.

3. Optische Einrichtung nach Anspruch 1 oder 2,
**dadurch gekennzeichnet, dass**
die Sensoreinrichtung (6) als Druckschalter und das Sensorelement (9) als die Unterlage(7) mechanisch beaufschlagendes Element ausgebildet sind.

4. Optische Einrichtung nach einem der vorhergehenden Ansprüche,
**dadurch gekennzeichnet, dass**
die Sensoreinrichtung (6) in einer zur Unterlage (7) hin offenen Ausnehmung (10) des die Leuchtlupe gegen die Unterlage abstützenden Bereiches (8) angeordnet ist

5. Optische Einrichtung nach einem der vorhergehenden Ansprüche,
**dadurch gekennzeichnet, dass**
die Sensoreinrichtung (6) als optischer Sensor ausgebildet ist.

6. Optische Einrichtung nach Anspruch 5,
**dadurch gekennzeichnet, dass**
die Sensoreinrichtung (6) hinter einem Fenster oder einer Filterscheibe angeordnet ist

7. Optische Einrichtung nach einem der vorhergehenden Ansprüche 5 oder 6,
**dadurch gekennzeichnet, dass**
die Sensoreinrichtung (6) einen eine Strahlung aussendenden (12) und einen auf diese Strahlung reagierfähigen Bereich (13) aufweist.

8. Optische Einrichtung nach einem der vorhergehenden Ansprüche,
**dadurch gekennzeichnet, dass**
im Griffelement (2) eine aufladbare Stromquelle und eine Leiterplatte (15) der Sensoreinrichtung (6) angeordnet sind.

9. Optische Einrichtung nach einem der vorhergehenden Ansprüche,
**dadurch gekennzeichnet, dass**
der Lupenkörper der Leuchtlupe (1) durch einen gabelförmigen Aufstellfuss parallel und mit Abstand von der zu betrachtenden Unterlage (7) gehalten wird und das Leuchtelement (5) im Bereich zwischen dem Lupenkörper und dem Aufstellfuss angeordnet ist.

10. Optische Einrichtung nach einem der vorhergehenden Ansprüche,
**dadurch gekennnzeichnet, dass**
das Leuchtelement (5) im Bereich des gabelförmigen Fusses angeordnet ist und zur Beleuchtung der Unterlage (7) mit Streiflicht dient.

11. Optische Einrichtung nach einem der vorhergehenden Ansprüche,
**dadurch gekennzeichnet, dass**
durch das Leuchtungselement (5) eine streifenartige Ausleuchtung der Unterlage (7) erzeugbar ist.

12. Optische Einrichtung nach einem der vorhergehenden Ansprüche,
**dadurch gekennzeichnet, dass**
die Sensoreinrichtung (6) einen elektromechanischen Sensor aufweist, der eine auf der Unterlage abrollbare Kugel aufweist, die mit einem die Kugeloberfläche beaufschlagenden Sensorelement zusammenwirkt.

13. Optische Einrichtung nach einem der vorhergehenden Ansprüche,
**dadurch gekennzeichnet, dass**
der Sensor (30) als Farbkamera ausgebildet ist und das Ausgangssignal hinsichtlich der erfassten Farben einer Farbanalyseeinheit (31) zuführbar ist, deren Ausgangssignal eine Farbsteuerschaltung der Leuchteinrichtung (50) ansteuert.

14. Optische Einrichtung nach einem der vorhergehenden Ansprüche,
**dadurch gekennzeichnet, dass**
die Leuchteinrichtung (50) als hinsichtlich ihrer Farbe veränderbare LED oder LED-Gruppe(n) ausgebildet ist.

## Claims

1. Enlarging optical arrangement in the form of an illuminating magnifier (1), which includes at least one gripping member (2) and one illuminating arrangement (50) for illuminating the article to be viewed, and which magnifier is provided with a sensor arrangement (6) which is intended to switch-on the illuminating member (5) and is orientated towards a support (7), which supports the illuminating magnifier (1) in the position of use, **characterised in that** the sensor member (6) is disposed in the lower end of a base, which forms a supporting region of the illuminating magnifier (1), and the base is disposed at one end of the gripping member (2) protruding horizontally from a magnifier body, the sensor being a sensor (30) analysing the colour(s) of the support (7) to be viewed with the illuminating magnifier (1), and the illuminating arrangement (50) is designed to radiate different colours and is controllable by the sensor (30) in respect of their colour radiation.

2. Optical arrangement according to claim 1, **characterised in that** the sensor arrangement (6) is disposed in a downwardly orientated region (8) supporting the illuminating magnifier (1) relative to the support (7).

3. Optical arrangement according to claim 1 or 2, **characterised in that** the sensor arrangement (6) is in the form of a pressure switch, and the sensor member (9) is in the form of an element which acts mechanically upon the support (7).

4. Optical arrangement according to one of the preceding claims, **characterised in that** the sensor arrangement (6) is disposed in a recess (10), open towards the support (7), of the region (8) supporting the illuminating magnifier (1) relative to the support.

5. Optical arrangement according to one of the preceding claims, **characterised in that** the sensor arrangement (6) is in the form of an optical sensor.

6. Optical arrangement according to claim 5, **characterised in that** the sensor arrangement (6) is disposed behind a window or a filter disc.

7. Optical arrangement according to one of the preceding claims 5 or 6, **characterised in that** the sensor arrangement (6) includes a region (12) which emits radiation, and a region (13) which is capable of reacting to this radiation.

8. Optical arrangement according to one of the preceding claims, **characterised in that** a chargeable current source and a printed circuit board (15) of the sensor arrangement (6) are disposed in the gripping member (2).

9. Optical arrangement according to one of the preceding claims, **characterised in that** the magnifier body of the illuminating magnifier (1) is held by a bifurcated base parallel to, and at a spacing from, the support (7) to be viewed, and the illuminating member (5) is disposed in the region between the magnifier body and the base.

10. Optical arrangement according to one of the preceding claims, **characterised in that** the illuminating member (5) is disposed in the region of the bifurcated base, and is used to illuminate the support (7) with a spotlight.

11. Optical arrangement according to one of the preceding claims, **characterised in that** a strip-like illumination of the support (7) can be generated by the illuminating member (5).

12. Optical arrangement according to one of the preceding claims, **characterised in that** the sensor arrangement (6) includes an electromechanical sensor, which includes a ball which can travel on the support and which co-operates with a sensor member acting upon the ball surface.

13. Optical arrangement according to one of the preceding claims, **characterised in that** the sensor (30) is in the form of a colour camera, and the output signal in respect of the determined colours can be supplied to a colour analysing unit (31), the output signal of which actuates a colour control circuit of the illuminating arrangement (50).

14. Optical arrangement according to one of the preceding claims, **characterised in that** the illuminating arrangement (50) is in the form of an LED or LED group(s), which can vary in respect of its (their) colour.

## Revendications

1. Dispositif optique grossissant sous la forme d'une loupe éclairée (1) qui présente au moins un élément de préhension (2) et un dispositif d'éclairage (5) pour éclairer l'objet à observer et qui est pourvue d'un dispositif capteur (6) qui est prévu pour mettre sous tension l'élément d'éclairage (5) et est dirigé contre une base (7) soutenant la loupe éclairée (1) en position d'utilisation,
**caractérisé en ce que**
l'élément capteur (6) est disposé dans l'extrémité inférieure d'un pied de pose qui forme une zone de soutien de la loupe éclairée (1) et le pied de pose est disposé à une extrémité de l'élément de préhension (2) éloignée horizontalement d'un corps de loupe, le capteur étant un capteur (30) qui analyse la ou les couleur(s) de la base (7) à observer avec la loupe éclairée (1), le dispositif d'éclairage (50) étant conçu pour émettre différentes couleurs et pouvant être commandé par le capteur (30) en ce qui concerne son émission de couleurs.

2. Dispositif optique selon la revendication 1,
**caractérisé en ce que**
le dispositif capteur (6) est disposé dans une zone (8) dirigée vers le bas, soutenant la loupe éclairée (1) contre la base (7).

3. Dispositif optique selon la revendication 1 ou 2,
**caractérisé en ce que**
le dispositif capteur (6) est réalisé sous forme d'interrupteur à poussoir et l'élément capteur (9) sous forme d'élément agissant mécaniquement sur la base (7).

4. Dispositif optique selon l'une des revendications précédentes,
**caractérisé en ce que**
le dispositif capteur (6) est disposé dans un évidement (10) ouvert vers la base (7) de la zone (8) soutenant la loupe éclairée contre la base.

5. Dispositif optique selon l'une des revendications précédentes,
**caractérisé en ce que**
le dispositif capteur (6) est réalisé sous forme de capteur optique.

6. Dispositif optique selon la revendication 5,
**caractérisé en ce que**
le dispositif capteur (6) est disposé derrière une fenêtre ou une plaque filtrante.

7. Dispositif optique selon l'une des revendications précédentes 5 ou 6,
**caractérisé en ce que**
le dispositif capteur (6) présente une zone (12) émettant un rayonnement et une zone (13) apte à réagir ce rayonnement.

8. Dispositif optique selon l'une des revendications précédentes,
**caractérisé en ce que**
une source de courant rechargeable et une carte à circuit imprimé (15) du dispositif capteur (6) sont disposées dans l'élément de préhension (2).

9. Dispositif optique selon l'une des revendications précédentes,
**caractérisé en ce que**
le corps de loupe de la loupe éclairée (1) est tenu parallèlement à la base (7) à observer et à distance de celui-ci par un pied de pose fourchu et l'élément d'éclairage (5) est disposé dans la zone entre le corps de loupe et le pied de pose.

10. Dispositif optique selon l'une des revendications précédentes,
**caractérisé en ce que**
l'élément d'éclairage (5) est disposé dans la zone du pied fourchu et sert à éclairer la base (7) avec une lumière rasante.

11. Dispositif optique selon l'une des revendications précédentes,
**caractérisé en ce que**
l'élément d'éclairage (5) permet de produire un éclairage en bande de la base (7).

12. Dispositif optique selon l'une des revendications précédentes,
**caractérisé en ce que**
le dispositif capteur (6) présente un capteur électromécanique qui présente une bille pouvant rouler sur la base qui coopère avec un élément capteur agissant sur la surface de la bille.

13. Dispositif optique selon l'une des revendications précédentes,
**caractérisé en ce que**
le capteur (30) est réalisé sous forme de caméra en couleurs et le signal de sortie peut être amené, en ce qui concerne les couleurs saisies, à une unité d'analyse de couleurs (31) dont le signal de sortie commande un circuit de commande de couleur du dispositif d'éclairage (50).

14. Dispositif optique selon l'une des revendications précédentes,
**caractérisé en ce que**
le dispositif d'éclairage (50) est réalisé sous forme de LED ou de groupe(s) de LED variables en ce qui concerne leur couleur.
